(19) **Europäisches Patentamt / European Patent Office / Office européen des brevets**

(11) **EP 1 771 851 B1**

(12) **EUROPEAN PATENT SPECIFICATION**

(45) Date of publication and mention
of the grant of the patent:
**11.03.2009 Bulletin 2009/11**

(21) Application number: **05776187.6**

(22) Date of filing: **15.07.2005**

(51) Int Cl.:
*G11B 19/24* (2006.01)  *G11B 19/28* (2006.01)

(86) International application number:
**PCT/EP2005/053408**

(87) International publication number:
**WO 2006/010716 (02.02.2006 Gazette 2006/05)**

(54) **METHOD FOR DETERMINING THE ROTATION FREQUENCY OF AN OPTICAL RECORDING MEDIUM**

VERFAHREN ZUR BESTIMMUNG DER ROTATIONSFREQUENZ EINES OPTISCHEN AUFZEICHNUNGSMEDIUMS

PROCEDE DE DETERMINATION DE LA FREQUENCE DE ROTATION D'UN SUPPORT D'ENREGISTREMENT OPTIQUE

| | |
|---|---|
| (84) Designated Contracting States:<br>**DE FR GB** | (72) Inventor: **BASLER, Stefan**<br>**78086 Brigachtal (DE)** |
| (30) Priority: **30.07.2004  EP 04018061**<br>**20.01.2005  EP 05100328** | (74) Representative: **Schmidt-Uhlig, Thomas**<br>**Deutsche Thomson OHG**<br>**European Patent Operations**<br>**Karl-Wiechert-Allee 74**<br>**30625 Hannover (DE)** |
| (43) Date of publication of application:<br>**11.04.2007  Bulletin 2007/15** | |
| (73) Proprietor: **Thomson Licensing**<br>**92100 Boulogne-Billancourt (FR)** | (56) References cited:<br>**US-A- 4 757 488**    **US-A- 4 757 489**<br>**US-A- 5 724 329** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a method for determining the rotation frequency of an optical recording medium, and to an apparatus for reading from and/or writing to optical recording media using this method.

For some operations within a drive for optical recording media a measure proportional to the rotation frequency of the optical recording medium is required. For example, some adjustments are ideally related to the rotation frequency of the optical recording medium. However, due to cost reduction requirements an encoder system for directly measuring the current rotation frequency of the optical recording medium is often omitted in drives for optical recording media driven at a constant linear velocity. In this case an alternative solution for determining the rotation frequency is needed.

US-A-4757488 discloses an apparatus for controlling a rotational servo by using a frequency pulse signal generator for generating a frequency pulse signal indicating a current rotational speed of the motor. A track count signal generator counts the number of tracks from the current track to an object track, and a microprocessor receives the frequency pulse and the track count signals and issues a command to generate a reference frequency pulse signal.

US-A-4757488 refers to a rotation control apparatus for a CLV system disc that sets an initial value based on an address signal reproduced from the CLV system disc and carries out a rotation control by use of the initial value, so that it is possible to carry out the rotation control even with respect to a CLV system disc on which an information signal is only recorded up to an intermediate position within a program region of the disc. An information signal is newly recordable in conformance with the CLV system from a position in a vicinity of the intermediate position where the previous recording had been discontinued.

US-A-4757489 shows a rotation control apparatus that controls a rotation frequency of a disc which is to be rotated at a constant linear velocity. The rotation control apparatus comprises a circuit for obtaining a first signal having a first frequency proportional to a rotation frequency of the disc, a circuit for comparing the first signal with a second signal having a second frequency which successively increases, and a control device for obtaining a present rotation frequency of the disc from the second signal which is obtained at a time when the first and second frequencies become equal to each other. The control device supplies to a motor which rotates the disc a driving signal which is obtained from the present rotation frequency in a recording mode, so that the disc rotates at the constant linear velocity.

It is an object of the invention to propose a method for determining the rotation frequency of an optical recording medium driven at a constant linear velocity if the rotation frequency cannot be directly measured.

According to the invention, this object is achieved by a method including the steps of:

- determining the number of tracks relative to a reference position at a radius on the optical recording medium based on the current subcode or sector information;
- determining the constant linear velocity; and
- calculating an approximate value for the rotation frequency from the determined number of tracks, the determined constant linear velocity, the radius of the reference position, and a distance between adjacent tracks.

For a specific optical recording medium driven at a specific constant linear velocity, the rotation period $T$ is given by $T=a+bN$, where $N$ is the number of tracks relative to the reference position and a and b are constants. From the rotation period T the rotation frequency f can be calculated using $f=1/T$. Preferably, the reference position on the optical recording medium is the beginning of a program area.

If different linear velocities are available, the currently used velocity has to be taken into account. When in addition different types of optical recording media can be reproduced, the specific parameters of the current optical recording medium are needed. These parameters include the radius of the reference position and the distance between adjacent tracks. Using these values, the constants a and b can be calculated for different types of recording media and different linear velocities.

A method according to the invention is favourably used in an apparatus for reading from and/or writing to optical recording media according to the subject - matter of claim 3.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1    depicts a method according to the invention for determining the rotation frequency of an optical recording medium, and

Fig. 2    schematically shows an apparatus for reading from and/or writing to optical recording media using a method according to the invention.

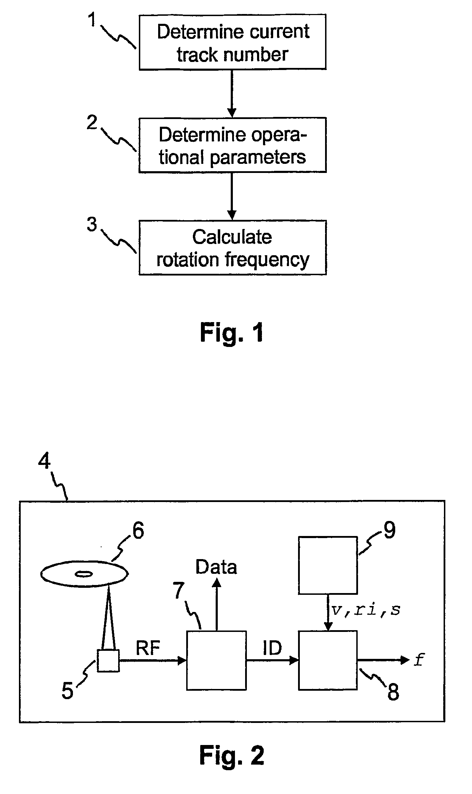

Fig. 1 depicts a method according to the invention for determining the rotation frequency of an optical recording medium. In a first step 1 the track number of the current position is calculated. This is done by applying algorithms commonly known for calculating the track number differences between a current track and a target track for track jump operations. In the present case, such an algorithm is applied to a notional track jump from the current position to the beginning of the program area of the optical recording medium. Basis for this step are the subcode or sector ID's on the optical recording medium. Of course, instead of the beginning of the program area any other reference position on the optical recording medium can be used. In the next step 2, a plurality of operational parameters are determined, e.g. the type of optical recording medium and the employed linear velocity. Of course, one or more of these parameters can likewise be determined beforehand. For example, the type of optical recording medium is usually determined before playback of the optical recording medium is initiated. The results of the first two steps form the basis of the third step 3, in which the current rotation frequency is calculated. In the following, the dependence between the rotation frequency and the values determined in the first step 1 and the second step 2 is described in terms of mathematical equations.

For a system operated at constant linear velocity (CLV) the relationship of circumference and linear velocity to disk rotation period is given by Equation 1, where $T$ is the period of one rotation in $\left[\frac{sec}{rot}\right]$, $U$ is the circumference at the current location in $[m]$, and $v$ is the constant linear velocity $\left[\frac{m}{sec}\right]$.

$$T = \frac{U}{v} \qquad\qquad \text{Equation 1}$$

Taking into account that $U=2\pi r$, $r$ being the radius in $[m]$, Equation 1 can be rewritten as:

$$T = \frac{2\pi r}{v} \qquad\qquad \text{Equation 2}$$

Considering further that $r=ri+N\times s$, where $ri$ is the radius at the beginning of program area in $[m]$, $N$ is the number of tracks relative to the beginning of the program area in $[tracks]$, and $s$ is the track pitch in $[m]$, i.e. the distance between two adjacent tracks, the radius of the current position can be expressed in terms of the radius of the beginning of the program area and the offset for the current position in terms of the track number and the track pitch.

$$T = \frac{2\pi}{v}\left(ri + N\times s\right) \qquad\qquad \text{Equation 3}$$

This equation allows to calculate the rotation period $T$ from the operational parameters and the current track.

Finally, the relationship between the period $T$ and the frequency $f$ in $\left[\frac{rot}{sec}\right]$ is given by:

$$f = \frac{1}{T} \qquad\qquad \text{Equation 4}$$

In the following a Compact Disk (CD) is used as an example for an optical recording medium. Of course, the invention is likewise applicable to other optical recording media driven at constant linear velocity. For a CD driven at 1X speed the linear velocity according to the standard is 1.2 - 1.4 m/sec. An empirical mean value is $v=1.25\left[\frac{m}{sec}\right]$. Filling in the actual figures for a CD driven at 1X speed in equation 3, i.e. $v=1.25\left[\frac{m}{sec}\right]$, $ri=25\times10^{-3}[m]$ and

$$s = 1.6 \times 10^{-6} \left[ \frac{m}{track} \right], \text{ yields:}$$

$$T\left[ \frac{sec}{rot} \right] = \frac{2\pi}{1.25 \left[ \frac{m}{sec} \right]} \left( 25 \times 10^{-3} [m] + N \times 1.6 \times 10^{-6} \left[ \frac{m}{track} \right] \right) \qquad \text{Equation 5}$$

By replacing $1.6 \times 10^{-6} \left[ \frac{m}{track} \right] = \frac{1}{625 \left[ \frac{tracks}{mm} \right]}$ in Equation 5 and rounding it to integer values, an approximate value 'msec per rotation period' is obtained. This result is appropriate in accuracy and dimension for most applications and efficient to compute on fixed point processors.

$$T\left[ \frac{msec}{rot} \right] \approx 5 \left[ \frac{sec}{m} \right] \times \left( 25[mm] + \frac{N[tracks]}{625 \left[ \frac{tracks}{mm} \right]} \right) \qquad \text{Equation 6}$$

For an apparatus which can only reproduce a single type of optical recording medium at a specific constant linear velocity, e.g. a CD player, the rotation period is given by a simple linear equation $T = a + bN$, with a and b being constants. If different constant linear velocities are available, the currently used velocity has to be taken into account. When in addition different types of optical recording media can be reproduced, the specific parameters of the current optical recording medium are needed. Consequently, in order to at least approximately determine the rotation frequency it is sufficient to calculate the current position on the recording medium relative to the centre or any other reference position of the recording medium, and to use this current position to calculate the rotation frequency based on the specific operating parameters like linear velocity etc. The invention is likewise applicable to zoned CLV media, i.e. media with different constant linear velocities for different zones of the medium.

Fig. 2 schematically shows an apparatus 4 for reading from and/or writing to optical recording media 6. The apparatus includes an optical pickup 5 for reading digital data RF from the optical recording medium 6. For simplicity, in the figure the processing of the analog signal read by the optical pickup 5 to obtain the digital data RF has been omitted. This processing is well known to a person skilled in the art. The data signal RF is transmitted to a processor 7, which extracts sector or subcode ID's and provides them to a rotation frequency determination means 8. The processor also extracts other data from the data signal RF and provides them to further processing means (not shown) of the apparatus. In addition to the sector or subcode ID's the rotation frequency determination means 8 also receives the necessary operational parameters *v*, *ri* and *s* from a parameter determination means 9. Based on the operational parameters and the sector or subcode ID's the rotation frequency determination means 8 calculates an approximate value for the rotation frequency *f* in accordance with the above derived equation 3.

**Claims**

1. Method for determining the rotation frequency (*f*) of an optical recording medium (6) driven with a constant linear velocity (*v*), **including** the step of:

    - determining (1) a number (*N*) of tracks relative to a reference position at a radius (*ri*) on the optical recording medium (6) based on a current subcode or sector information;
    - determining (2) the constant linear velocity (*v*); and
    - calculating (3) an approximate value for the rotation frequency (*f*) from the determined number (*N*) of tracks, the determined constant linear velocity (*v*), the radius (*ri*) of the reference position, and a distance between adjacent tracks.

2. Method according to claim 1, **wherein** the reference position on the optical recording medium (6) is the beginning of a program area.

3. Apparatus for reading from and/or writing to optical recording media (6), **characterized in that** it includes:

   - a processor (7) for determining (1) a number (*N*) of tracks relative to a reference position at a radius (*ri*) on the optical recording medium (6) based on a current subcode or sector information;
   - a parameter determination means (9) for determining (2) at least the constant linear velocity (*v*); and
   - a rotation frequency determination means (8) for calculating (3) an approximate value for the rotation frequency (*f*) from the determined number (*N*) of tracks, the determined constant linear velocity (*v*), the radius (*ri*) of the reference position, and a distance between adjacent tracks.

**Patentansprüche**

1. Verfahren zur Ermittlung der Rotationsfrequenz (*f*) eines mit einer konstanten linearen Geschwindigkeit (*v*) angetriebenen optischen Aufzeichnungsmediums (6), folgende Schritte **umfassend:**

   - Ermitteln (1) einer Anzahl (*N*) von Spuren relativ zu einer auf aktuellen Subcode- oder Sektorinformationen basierenden Bezugsposition bei einem Radius (*ri*) auf dem optischen Aufzeichnungsmedium (6),
   - Ermitteln (2) der konstanten linearen Geschwindigkeit (*v*) und
   - Berechnen (3) eines Näherungswertes für die Rotationsfrequenz (*f*) aus der ermittelten Anzahl (*N*) von Spuren, der ermittelten konstanten linearen Geschwindigkeit (*v*), dem Radius (*ri*) der Bezugsposition und einem Abstand zwischen benachbarten Spuren.

2. Verfahren nach Anspruch 1, **wobei** die Bezugsposition auf dem optischen Aufzeichnungsmedium (6) der Anfang eines Programmbereichs ist.

3. Vorrichtung zum Lesen und/oder Beschreiben von optischen Aufzeichnungsmedien (6), **dadurch gekennzeichnet, dass** sie umfasst:

   - einen Prozessor (7) zum Ermitteln (1) einer Anzahl (*N*) von Spuren relativ zu einer auf aktuellen Subcode- oder Sektorinformationen basierenden Bezugsposition bei einem Radius (*ri*) auf dem optischen Aufzeichnungsmedium (6),
   - ein Parameterermittlungsmittel (9) zum Ermitteln (2) mindestens der konstanten linearen Geschwindigkeit (*v*) und
   - ein Rotationsfrequenzermittlungsmittel (8) zum Berechnen (3) eines Näherungswertes für die Rotationsfrequenz (*f*) aus der ermittelten Anzahl (*N*) von Spuren, der ermittelten konstanten linearen Geschwindigkeit (*v*), dem Radius (*ri*) der Bezugsposition und einem Abstand zwischen benachbarten Spuren.

**Revendications**

1. Procédé de détermination de la fréquence de rotation (*f*) d'un support d'enregistrement optique (6) entraîné à une vitesse linéaire constante (*v*), comprenant les étapes suivantes :

   - détermination (1) d'un nombre de pistes (*N*) par rapport à une position de référence au niveau d'un rayon (*ri*) sur le support d'enregistrement (6) en fonction d'un sous-code ou d'informations de secteur effectifs ;
   - détermination (2) de la vitesse linéaire constante (*v*) ; et
   - calcul (3) d'une valeur approximative de la fréquence de rotation (*f*) à partir du nombre déterminé (*N*) de pistes, de la vitesse linéaire constante (*v*) déterminée, du rayon (*ri*) de la position de référence, et d'une distance entre des pistes adjacentes.

2. Procédé selon la revendication 1, **dans lequel** la position de référence sur le support d'enregistrement optique (6) est le début d'une zone de programme.

3. Appareil de lecture et/ou d'écriture sur des supports sur des supports d'enregistrement optique (6), **caractérisé en ce qu'**il comprend :

   - un processeur (7) pour déterminer (1) un nombre (*N*) de pistes par rapport une position de référence au niveau d'un rayon (*ri*) sur le support d'enregistrement optique (6) en fonction d'un sous-code ou d'informations de secteur effectifs ;
- un moyen de détermination (9) de paramètres pour déterminer (2) au moins la vitesse linéaire constante ($v$) ; et
- un moyen de détermination (8) de la fréquence de rotation pour calculer (3) une valeur approximative de la fréquence de rotation ($f$) à partir du nombre déterminé ($N$) de pistes, de la vitesse linéaire constante ($v$) déterminée, du rayon ($ri$) de la position de référence, et d'une distance entre des pistes adjacentes.

1 → Determine current
track number

2 → Determine opera-
tional parameters

3 → Calculate
rotation frequency

**Fig. 1**

4

6

Data

9

7

RF    ID    $v, ri, s$

5    $f$

8

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4757488 A

- US 4757489 A